# EUROPÄISCHE PATENTSCHRIFT

(11) **EP 0 537 765 B1**
(45) Veröffentlichungstag und Bekanntmachung des Hinweises auf die Patenterteilung: **29.01.1997**
(21) Anmeldenummer: 92117723.4
(22) Anmeldetag: 16.10.1992
(51) Int. Cl.: G01F 1/84, G01F 1/74

(54) **Vorrichtung zur Messung eines Massenstroms nach dem Coriolis-Prinzip**
Method and device for the determination of the mass flow rate following the Coriolis principle
Procédé et dispositif pour la détermination du débit massique selon le principe Coriolis

(30) Priorität: 17.10.1991 DE 4134318
(43) Veröffentlichungstag der Anmeldung: 21.04.1993
(73) Patentinhaber: Pfister GmbH, 86165 Augsburg (DE)
(72) Erfinder: Häfner, Hans Wilhelm, W-8890 Aichach-Walchshofen (DE)
(74) Vertreter: Fiener, Josef

(56) Entgegenhaltungen:
- EP-A- 0 292 723
- WO-A-85/00881
- DE-C- 3 346 145

## Beschreibung

Die Erfindung betrifft eine Vorrichtung zur Messung eines Massenstroms nach dem Coriolis-Prinzip, insbesondere eines pneumatisch geförderten Schüttgutes, gemäß den oberbegrifflichen Merkmalen des Patentanspruches 1.

Eine derartige Vorrichtung ist aus der DE 25 44 976 A1 bekannt, wobei insbesondere die Durchsatzmenge von Schüttgut, wie Kalkstaub oder Feinerz, ermittelt werden soll. Dies erfolgt durch die wirksame Trägheitskraft (Coriolis-Kraft), welche bei der Koppelung eines bewegten Masseteilchens mit einem sich drehenden Bezugskörper, hier einem Meßrad, das einen Drehteller mit daran radial befestigten Leitschaufeln aufweist, auftritt. Die auftretende Änderung des Antriebsdrehmomentes wird hierbei als Meßgröße zur Bestimmung des Massenstromes herangezogen, der bei konstanter Winkelgeschwindigkeit des Meßrades direkt proportional dem gemessenen Drehmoment ist. Zur Erfassung der Drehmomentänderung wird in dieser Druckschrift die Leistungsaufnahme des Antriebsmotors herangezogen.

Desweiteren sind ähnliche Meßvorrichtungen aus der DE 33 46 145 A1 und der DE 39 40 576 A1 bekannt. Hierbei wird anstatt der Messung der Stromaufnahme des Antriebsmotors dieser schwenk- bzw. drehbeweglich gelagert und das Reaktionsdrehmoment auf einen seitlich angeordneten Kraftaufnehmer geleitet.

Bei diesen bekannten Coriolis-Kraft-Meßvorrichtungen ist nachteilig, daß diese nur eine begrenzte Durchfluß-Leistung haben, was insbesondere durch die scharfen Umlenkungen um jeweils 90° im Zuführbereich des Meßrades und um nahezu 180° am Abwurfbereich der Leitschaufeln bedingt ist. Durch die hohen Umlenkwinkel treten, insbesondere bei pneumatischer Förderung mit hohen Zuführgeschwindigkeiten, unkontrollierte Abpralleffekte auf dem rotierenden Meßteller auf, wodurch die Meßgenauigkeit negativ beeinflußt wird, da sich insbesondere die verbleibende Beschleunigungsstrecke durch die Leitschaufeln verändern kann. Außerdem gehen auch unterschiedliche Reibungseinflüsse zwischen den Masseteilchen und den Leitschaufeln als Meßabweichungen in das Meßergebnis ein.

Zudem können sich insbesondere bei hoher Zuführgeschwindigkeit und bei leicht klebrigem Schüttgut infolge der starken Umlenkungen auf dem Meßrad Anbackungen oder Ablagerungen bilden, wodurch das Meßrad eine Unwucht erhalten kann oder sich sogar Verstopfungen aufbauen können. In diesem Falle müßte das Meßrad auf aufwendige Weise gereinigt werden. Weiterhin führt das Aufprallen von hartem oder schleißendem Fördergut, wie Erzen oder korundhaltiger Flugasche, zu erhöhtem Verschleiß an dem Meßrad, so daß auch in diesem Falle aufwendige Wartungs- und Reparaturarbeiten anfallen würden.

Demzufolge liegt der Erfindung die Aufgabe zugrunde, eine Corioliskraft-Meßvorrichtung mit den oberbegrifflichen Merkmalen dahingehend weiterzubilden, daß eine erhöhte Meßgenauigkeit erreicht wird und der Wartungsaufwand reduziert wird.

Diese Aufgabe wird gelöst mit einer Vorrichtung gemäß den Merkmalen des Patentanspruches 1.

Durch die in Durchflußrichtung des Fördergutes gepfeilte Ausbildung des Meßrades ergibt sich eine aerodynamisch günstige Weiterleitung des Schüttgut- und Luftstromes, insbesondere bei pneumatischer Förderung mit hoher Zuführgeschwindigkeit. Hierbei werden starke Umlenkungen im Zuführbereich und im Abwurfbereich vermieden, so daß die störenden Aufpralleffekte der Materialpartikel des Fördergutes auf das Meßrad und die damit verursachten Reibungseinflüsse erheblich reduziert werden. Durch die kegelförmige Gestaltung des Drehtellers wird zudem vermieden, daß sich dort Fördergut anlagern kann. Der Pfeilwinkel des Meßrades ist dabei bevorzugt so gewählt, daß je nach Zuführgeschwindigkeit und Zentrifugalbeschleunigung durch das Meßrad die Partikel des Massenstroms etwa der Mittellinie der Leitschaufeln folgen. Die Mittellinie der Leitschaufeln als Maß für die Pfeilung des Meßrades ist hierbei an die jeweilige Resultierende aus Axialgeschwindigkeit und Radialgeschwindigkeit angepaßt, so daß das Fördergut möglichst ohne Berührung am Innen- und Außenmantel des Meßrades nach außen gefördert und abgeschleudert wird.

Durch die im Zuführbereich umgebogenen oder abgekanteten Leitschaufelspitzen wird eine strömungsgünstige Einleitung des zugeführten Fördergutes in das Meßrad erreicht. Hierbei wird dem Fördergut bereits am Eintritt in das Meßrad eine Tangentialbeschleunigung erteilt, so daß das Fördergut die Winkelgeschwindigkeit des Meßrades annimmt und ein Aufprallen auf das Zentrum des Meßrades vermieden wird. Zudem kann hierdurch das Fördergut auch noch in axialer Richtung beschleunigt werden, so daß trotz der starken Zentrifugalbeschleunigung eine etwa geradlinige Resultierende aus Axialgeschwindigkeit und Radialgeschwindigkeit erreicht werden kann. Hierdurch läßt sich das Meßrad mit glattflächigem Innen- und Außenkegel relativ einfach herstellen. Für besonders hohe Radialbeschleunigungen sind zur Anpassung der Mittellinien der Leitschaufeln an die jeweilige Resultierende aus Axialgeschwindigkeit und der quadratisch zunehmenden Radialgeschwindigkeit bevorzugt gekrümmte Leitschaufeln vorgesehen.

Durch die kegelförmige Ausbildung des Innenmantels des Meßrades läßt sich in den dadurch entstehenden Hohlraum der Antriebsmotor bzw. das Lagergehäuse für das Meßrad größtenteils unterbringen, so daß der Antriebsmotor quasi im Windschatten des Meßrades untergebracht ist und somit das Fördergut um das Lagergehäuse bzw. den Antriebsmotor herumgeführt wird. Trotz des gepfeilten Meßrades ergibt sich somit keine Zunahme der axialen Baulänge.

In vorteilhafter Ausführung ist zudem zur Lagerung des Meßrades ein Doppel-Schwenklager vorgesehen, das direkt auf der Antriebswelle des Meßrades befestigt ist. Hierdurch ergibt sich gegenüber den sonst vorgeschlagenen Lösungen, bei denen die Schwenklager am Motorgehäuse befestigt sind, eine wesentlich geringere Reibung, da hierbei kein Losbrechmoment oder Stick-Slip-Effekt auftritt. Zudem können im Durchmesser bedeutend kleinere Lager gewählt werden, was sich hinsichtlich der Herstellungskosten günstig auswirkt. Durch diese reibungsarme Lagerung und die dadurch verbesserte Meßempfindlichkeit kann andererseits wiederum der Durchmesser und/oder die Drehzahl des Meßrades verringert werden, wodurch der Bauaufwand reduziert wird und auch das Verschleißverhalten verbessert wird, da geringere Umlaufgeschwindigkeiten zugleich den Verschleiß reduzieren.

Weiterhin ist vorteilhaft, daß das Meßrad an einem seitlich nach außen geführten Auslegerarm gelagert ist. Hierdurch ist die Kraftmeßvorrichtung für die Messung des Reaktionsmomentes außerhalb des Förderweges angeordnet, so daß diese zu Wartungszwecken leicht überprüft werden kann und im Bedarfsfall leicht ausgetauscht werden kann. Zudem ergibt sich durch den Ausleger, insbesondere in der Form als Lenkergestänge eine Übersetzung, so daß die Meßgenauigkeit entsprechend verbessert wird. Außerdem erlaubt die Aufhängung des Meßrades an einem nach außen geführten Ausleger oder Lenkergestänge die externe staubfreie Anordnung des Antriebsmotors, so daß dessen Trägheit das Meßergebnis nicht beeinflussen kann. Da gerade für hohe Durchsatzmengen leistungsstarke Antriebsmotoren mit dementsprechend großer träger Masse erforderlich sind, ist deren Einregelung in eine bestimmte Lage nur schwer möglich. Durch die hohe Eigenmasse und dementsprechende Trägheit sind jedoch kleine Schwankungen des Reaktionsmomentes, insbesondere bei pulsierenden Fördergutströmungen, kaum mehr feststellbar. Durch die externe Anordnung des Antriebsmotors wird diese mögliche Meßfehlerquelle reduziert und eine einfache Zugänglichkeit des Motors für Wartungszwecke erreicht. Der Auslegerarm und insbesondere das Lenkergestänge weisen zudem gegenüber einer Wälzlagerung des Motorgehäuses nach dem Stand der Technik eine erheblich geringere Reibung auf.

Weitere vorteilhafte Ausgestaltungen sind Gegenstand der Unteransprüche.

Nachfolgend werden anhand der Zeichnungen mehrere Ausführungsbeispiele näher beschrieben und erläutert. Es zeigen:
- Fig. 1: einen Längsschnitt durch eine Corioliskraft-Meßvorrichtung mit einem Meßrad;
- Fig. 2: eine Draufsicht auf das Meßrad gemäß Fig. 1, mit einer gesondert dargestellten Leitschaufel zur Verdeutlichung;
- Fig. 3: eine abgewandelte Ausführung des Meßrades in Fig. 1;
- Fig. 4: eine weitere Ausführungsform des Meßrades;
- Fig. 5: eine schematische Darstellung der Lageranordnung der Meßvorrichtung gemäß Fig. 1, mit einer zugehörigen, hier links dargestellten, um 90° gekippten Ansicht;
- Fig. 6: eine schematische Seitenansicht der Meßvorrichtung einer zweiten Ausführungsform mit zugeordneter, um 90° gekippter Ansicht;
- Fig. 7: eine abgewandelte Ausführungsform gemäß Fig. 6;
- Fig. 8: eine Kombination der Ausführungsformen aus Fig. 6 und 7;
- Fig. 9: eine abgewandelte Ausführungsform gemäß Fig. 8;
- Fig. 10: ein weiteres Ausführungsbeispiel der Meßvorrichtung; und
- Fig. 11: eine besondere Antriebsanordnung für die Meßvorrichtung.

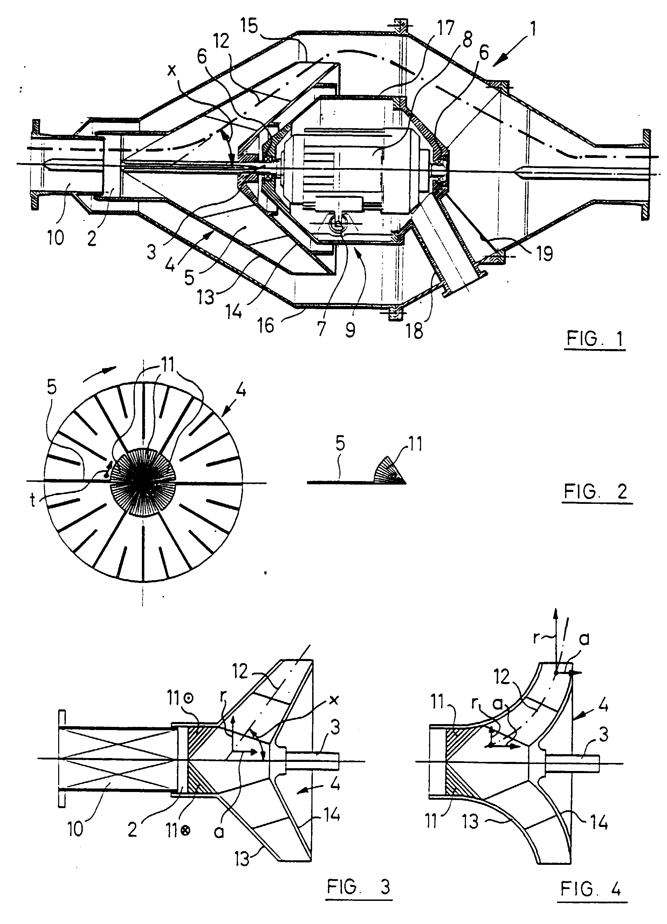

In Fig. 1 ist eine Corioliskraft-Meßvorrichtung 1 im Längsschnitt dargestellt, wie sie sich zum Einbau insbesondere in pneumatische Förderanlagen zur Erfassung eines Massenstromes eignet. Ein Fördergut tritt durch einen Zuführbereich 2 in ein kegelförmiges Meßrad 4 ein, das von einer Antriebswelle 3 angetrieben ist. Das drehtellerartige Meßrad 4 weist radiale Leitschaufeln 5 auf, die das eintretende Fördergut aus der axialen Richtung radial umlenken und bis zu einer Abwurfkante 15 beschleunigen. Das Fördergut wird allseitig am Umfang des Meßrades 4 abgeworfen und innerhalb eines Gehäuses 16 weitertransportiert, wie dies in der oberen Hälfte der Meßvorrichtung 1 strichpunktiert dargestellt ist. Gemäß dem Coriolis-Prinzip bewirkt die Masse des durchströmenden Fördergutes ein Reaktionsmoment auf das Meßrad 4 bzw. dessen Antriebsmotor 8, der sich unter Bildung eines hier nach unten abstehenden Hebels auf eine Kraftmeßzelle 7 abstützt. Hierbei sind das Meßrad 4 und der Antriebsmotor 8 in Doppel-Schwenklagern 6 verdrehbar gelagert, so daß hierdurch eine Drehmoment-Meßvorrichtung 9 gebildet ist, die die beim Massendurchfluß auftretende Änderung des Antriebsdrehmoments als Meßgröße zur Bestimmung des Massenstroms erfaßt.

Vor dem Zuführbereich 2 des Meßrades 4 ist ein Strömungsgleichrichter 10 vorgesehen, der eine drallfreie Anströmung auf das Meßrad 4 sicherstellen soll. Die inneren Enden der Leitschaufeln 5 ragen bis zu dem Zuführbereich 2, wo sie in Umfangsrichtung abgekröpft oder abgebogen sind, wie dies in Fig. 2 näher dargestellt ist. Das Meßrad 4 ist lösungsgemäß pfeilspitzenförmig ausgebildet, wozu ein kegelförmiger Innenmantel 14 und ein kegelförmiger Außenmantel 13 vorgesehen sind, die die Leitschaufeln 5 an ihren Seitenkanten abdecken. Die zwischen dem Innenmantel 14 und Außenmantel 13 gebildete Mittellinie 12 der Leitschaufeln 5 ist hier unter einem spitzen Winkel x zur Antriebswelle bzw. Achse 3 des Meßrades 4 ausgerichtet. Dieser Pfeilungswinkel x beträgt hier etwa 30°, kann jedoch auch größer gewählt werden, wie im Zusammenhang mit den Fig. 3 und 4 erläutert werden wird.

Innerhalb des Innenmantels 14 ist ein Lagergehäuse 17 ausgebildet, das die beiden Schwenklager 6 trägt und den Motor 8 sowie die Drehmoment-Meßvorrichtung 9 mit der Kraftmeßzelle 7 umschließt. Das Lagergehäuse 17 ist über Abstützrippen 19, die ebenfalls in Art eines Strömungsgleichrichters ausgebildet sein können, abgestützt. Zudem ist ein nach außen führendes Rohr 18 vorgesehen, das sowohl der Luftzuführung zu dem Antriebsmotor 8, als auch der Aufnahme der Stromkabel und der Meßleitungen von der Kraftmeßzelle 7 nach außen dient.

Die hier dargestellte Corioliskraft-Meßvorrichtung 1 eignet sich insbesondere zum Einbau in pneumatische Förderanlagen, wobei die Ausrichtung nahezu beliebig ist. So kann die hier dargestellte Meßvorrichtung 1 auch vertikal angeordnet sein. In der vertikalen Ausrichtung kann die Meßvorrichtung 1 auch direkt unter einem Schüttgut-Bunker angeordnet sein, wobei sich durch die Pfeilung des Meßrades 4 eine günstige Durchströmung ergibt. In dieser Anordnung ist zudem gegenüber den bekannten scheibenförmigen Meßrädern von Vorteil, daß auf dem kegelförmigen Innenmantel 14 bei Stillstand des Antriebsmotors 8 und damit des Meßrades 4, wie dies insbesondere bei unterbrochenem Betrieb von Dosieranlagen der Fall ist, kein Fördergut auf dem Meßrad 4 liegenbleiben kann und dort unter ungünstigen Bedingungen festkleben kann.

In Fig. 2 ist das Meßrad 4 mit seiner Vielzahl von genau radial angeordneten Leitschaufeln 5 in Vorderansicht vom Zuführbereich 2 her dargestellt, wobei der Außenmantel 13 weggelassen ist. Das Meßrad 4 weist hier sechs bis zum Zentrum des Meßrades 4 reichende Leitschaufeln 5 auf, wobei in den Zwischensektoren noch eine entsprechende Anzahl kürzerer Leitschaufeln vorgesehen sind. Die hier mit dem Bezugszeichen versehene Leitschaufel 5 ist im rechten Teil von Fig. 2 zur Verdeutlichung gesondert herausgezeichnet. Am inneren Ende ist die Leitschaufel 5 mit einer etwa dreiecksförmigen Abkantungsfläche 11 versehen, die um etwa 45° gegenüber der senkrecht zur Zeichenebene stehenden Hauptfläche der Leitschaufel 5 abgebogen ist. Diese Abkantung in tangentialer Richtung, die sich auch vom Zentrum aus bis etwa zu der Mitte des Außenmantels 13 hin erstrecken kann, weist in Umlaufrichtung, wobei die Vorderkante der hier etwa dreiecksförmigen Abkantungsfläche 11 aus der Zeichenebene herausragen würde. Hierdurch wird zugeführtes Fördergut zwischen den einzelnen Abkantungsflächen 11 unter Erteilung einer Tangentialbeschleunigung t in die einzelnen Sektoren zwischen den radialen Leitschaufeln 5 eingeschleust. Durch diese Abkantungsflächen 11 wird somit dem Fördergut sofort bei Eintritt in das Meßrad 4 eine Tangentialbeschleunigung t erteilt, so daß ein starkes Aufprallen auf den Innenmantel 14 oder den Leitschaufeln 5 praktisch nicht auftreten kann. Der Abkantungswinkel der Abkantungsfläche 11 entspricht zur Erreichung einer möglichst störungsfreien Einleitung der Resultierenden aus axialer Eintrittsgeschwindigkeit des Fördergutes und tangentialer Umlaufgeschwindigkeit der Leitschaufeln 5. Hierdurch ist auch ein besonders großer Eintrittsquerschnitt in das Meßrad 4 möglich.

In Fig. 3 ist der weitere Verlauf der Bewegung durch das Meßrad 4 gezeigt. Durch die hier mit den üblichen Pfeilsymbolen versehenen Abkantungsflächen 11, wobei die obere zum Betrachter hinweist, während die untere in die Zeichenebene zeigt, wird durch diese Verschränkung der Abkantungsflächen bereits im Zentrum eine beachtliche Radialgeschwindigkeit r erreicht, so daß der Durchmesser des Meßrades 4 aufgrund dieser rasch einsetzenden Radialbeschleunigung insgesamt kleiner gewählt werden kann oder auch die Winkelgeschwindigkeit reduziert werden kann. Zudem wirkt auf einen hier beispielhaft dargestellten Fördergutpartikel die axiale Zuführschwindigkeit a. Die Mittellinie 12 zwischen dem Außenmantel 13 und dem Innenmantel 14 ist hierbei so ausgerichtet, daß die Mittellinie 12 der Resultierenden aus der Axial- und Radialgeschwindigkeit entspricht. Hierdurch wird erreicht, daß sich die Fördergutpartikel nicht an den Innen- und Außenmantel 13, 14 anlegen, sondern nahezu reibungsfrei durch das Meßrad 4 hindurchlaufen. Der Winkel x der Mittellinie 12 beträgt hier etwa 50°, so daß sich diese Meßradform gegenüber der stark gepfeilten Form in Fig. 1 für niedrigere axiale Zuführgeschwindigkeiten eignet.

In Fig. 4 ist eine abgewandelte Ausführungsform dargestellt, wobei die dortige Mittellinie 12 entsprechend der quadratischen Zunahme der Radialgeschwindigkeit r gestaltet ist. Durch die gewölbte Form ist dieses Meßrad 4 im Unterschied zu dem aus Blechen herzustellenden Meßrad mit glattflächigen Begrenzungen zwar schwieriger herzustellen, z. B. durch Gießen, jedoch genauer an die Strömungsverhältnisse angepaßt. Um eine zu starke radiale Ausrichtung der Resultierenden zu vermeiden ist von Vorteil, daß mit den verschränkten Abkantungsflächen 11 auch eine Erhöhung der Axialgeschwindigkeit erreicht werden kann, so daß eine zu starke Umlenkung in die radiale Richtung bei der Meßrad-Gestaltung vermieden werden kann. Es sei darauf hingewiesen, daß durch diese Meßradform eine erhebliche Förder- oder Gebläsewirkung erzielt wird, so daß durch Änderung der Drehzahl des Meßrades 4 die Ansaugwirkung aus einem Injektor und damit der Massendurchsatz des Fördergutes einstellbar ist.

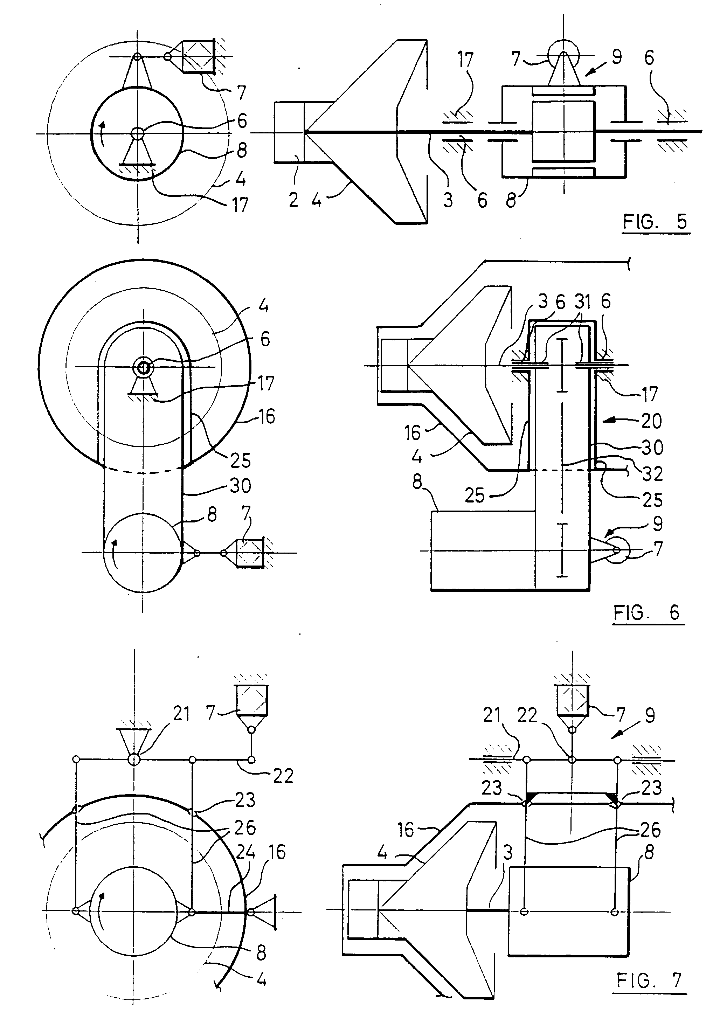

In Fig. 5 ist die Lageranordnung der Doppel-Schwenklager 6 aus Fig. 1 schematisch dargestellt. Wie ersichtlich, ist die Antriebswelle 3 des Meßrades 4 neben der Lagerung im Antriebsmotor 8 seitlich in den Doppel-Schwenklagern 6 innerhalb des Lagergehäuses 17 verdrehbar gelagert, so daß das Reaktionsmoment auf die Kraftmeßzelle 7 wirken kann. Da die Antriebswelle 3 umläuft, ist die Reibung des Schwenklagers 6 gegenüber einer Lageranordnung um das praktisch stationäre Motorgehäuse des Antriebsmotors 8 herum bedeutend geringer, so daß auch geringfügige Reaktionsmoment- und damit Massenstromänderungen an der Kraftmeßzelle 7 feststellbar sind. Im linken Figurenteil ist die entsprechende Seitenansicht dargestellt.

In Fig. 6 ist eine besonders vorteilhafte Ausführungsform dargestellt, wobei ein Ausleger 20, hier in Form eines Getriebegehäuses 30 für ein Getriebe, hier einen Riementrieb 32 seitlich am Gehäuse 16 nach außen geführt und auf eine Kraftmeßzelle 7 abgestützt ist. Das Getriebegehäuse 30 ist hierbei mit geringem Spiel in eine geschlossene, schachtartige Einbuchtung 25 des Gehäuses 16 eingepaßt, die im Zentrum das Lagergehäuse 17 für die Antriebswelle 3 des Meßrades 4 bildet.

Da das Getriebegehäuse 30 zur Drehmomentübertragung auf die Kraftmeßzelle 7 als einzigen Freiheitsgrad geringfügig verschwenkbar sein muß, ist es im Zentrum mittels der Schwenklager 6 und Lagerzapfen 31 gegenüber dem Lagergehäuse 17 am inneren Ende der Einbuchtung 25 drehbeweglich gelagert. Der Antriebsmotor 8 ist hier außerhalb des Gehäuses 16 angeordnet, so daß dieser ebenso wie die Kraftmeßzelle 7 bei Bedarf auf einfache Weise gewartet werden kann. Durch die große Hebellänge des Getriebegehäuses 30 ergibt sich zudem eine entsprechende Übersetzung und damit eine verbesserte Meßgenauigkeit. Als Getriebe 32 ist hier ein Zahnriemenantrieb vorgesehen, es kann jedoch auch ein hydraulisches Getriebe vorgesehen sein, so daß nur die Versorgungsleitungen im Getriebegehäuse 30 nach innen führen und somit das Gehäuse 30 entsprechend schmäler gestaltet werden kann.

In Fig. 7 ist eine abgewandelte Ausführungsform dargestellt, wobei hier zur externen Drehmomentsabnahme ein parallelogrammförmiges Lenkergestänge 26 als Ausbildung des Auslegers 20 vorgesehen ist, mit dem der zentral angeordnete Motor 8 und damit das Meßrad 4 gelagert sind. Zur Fesselung des Antriebsmotors 8 ist ein um 90° versetzt ausgerichteter Koppelarm 24 vorgesehen und der im rechten Figurenteil obere Lenker gabelförmig ausgebildet. Die Lenker 26 sind über einen weiteren Lenkerarm 22 an einer Abstützachse 21 gelagert, so daß das Reaktionsmoment des Meßrades 4 über den Antriebsmotor 8, die Parallelogrammlenker 26 und den Lenkerarm 22 die Kraftmeßzelle 7 zur Drehmomenterfassung beaufschlagt. Die Lenker 26 sind hier an elastischen Durchführungen 23 aus dem Gehäuse 16 herausgeführt, können jedoch auch in entsprechenden Einbuchtungen 25 wie in Fig. 6 mit minimalem Spiel angeordnet sein.

Auch hier ergibt sich durch das Lenkergestänge 26 eine entsprechende Übersetzung und damit ein verbessertes Ansprechen der Drehmoment-Meßvorrichtung 9, zumal derartige Lenker 26 nahezu reibungsfrei gelagert sind. Auch die Abstützachse 21 ist bevorzugt als reibungsfreies Kreuzfedergelenk ausgeführt.

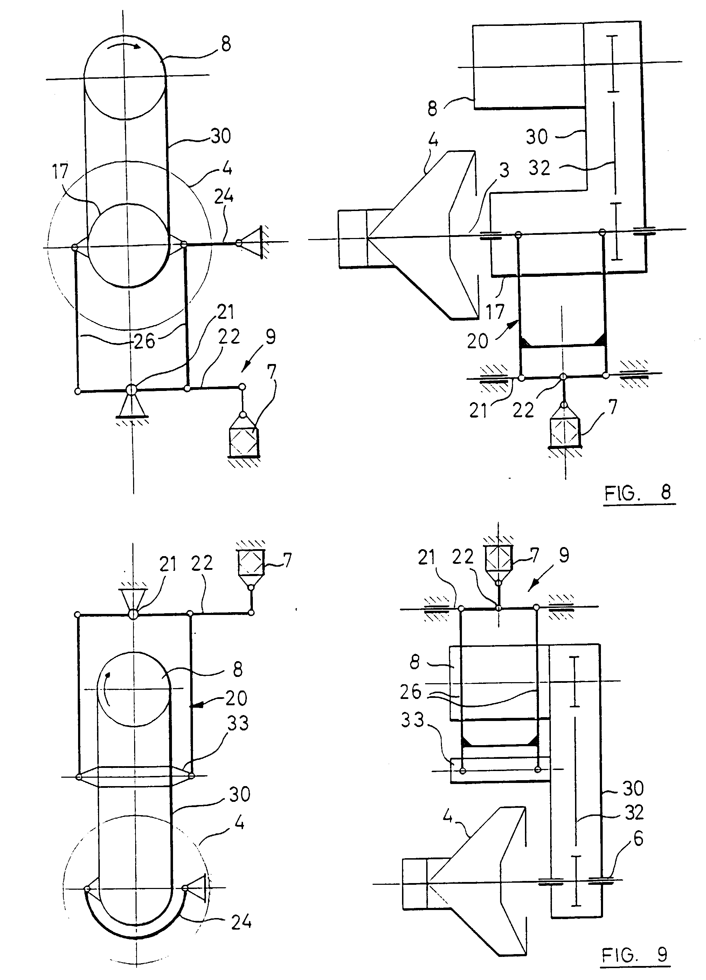

In Fig. 8 ist eine weitere Ausführungsform dargestellt, die eine Kombination der Fig. 6 und 7 darstellt. Hierbei ist der Auslegerarm 20 in der Form als Getriebegehäuse 30 mit dem Getriebe 32 und dem extern angeordneten Antriebsmotor 8 im Zentrum, also dem Lagergehäuse 17 für das Meßrad 4, über das auf die andere Seite herausgeführte parallelogrammartige Lenkergestänge 26 gelagert. Da hierdurch außer dem für das Meßrad 4 absolut erforderlichen, hier vergrößert dargestellten Lagergehäuse 17 sich keine weiteren Teile im Zentrum befinden, ist das Trägheitsmoment dieser Anordnung besonders gering, so daß bereits geringe Reaktionsmoment-Änderungen an der Kraftmeßzelle 7 erfaßbar sind. Hierdurch ergibt sich eine besonders genaue Einregelung eines Soll-Massenstromes, wie es für verschiedene Dosierverfahren von Schüttgut vorteilhaft ist. Das Gehäuse 16 ist hier nicht dargestellt, würde jedoch in engem Abstand das Meßrad 4 umschließen, wie auch in Fig. 6 und 7 dargestellt ist.

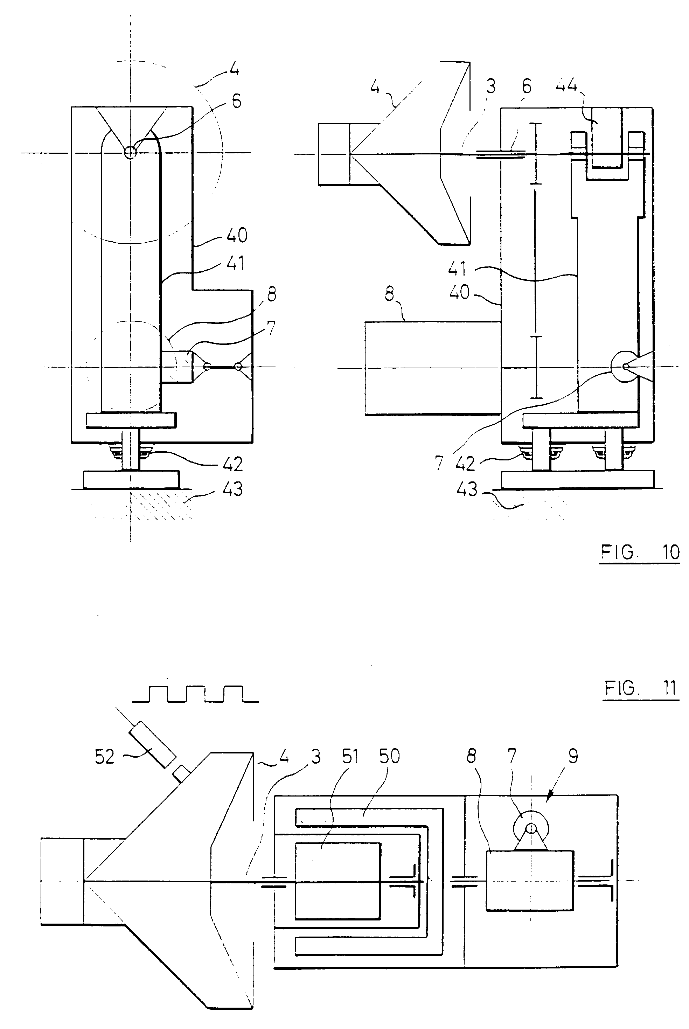

In Fig. 9 ist eine weitere Ausführungsform gezeigt, wobei der Auslegerarm 20 in der Ausbildung als Getriebegehäuse 30 über einen seitlich auskragenden Tragarm 33 an den Vorderenden eines wiederum parallelogrammförmigen Lenkergestänges 26 befestigt ist. Der seitliche Tragarm 33 bildet hierbei eine virtuelle Schwenkachse, wobei einerseits der Antriebsmotor 8 und andererseits das Meßrad 4 hinsichtlich des Tragarmes 33 etwa im Gleichgewicht sind, so daß hierdurch ebenfalls ein feinfühliges Feststellen von Reaktionsmoment-Änderungen erreicht wird.

In Fig. 10 ist eine weitere Ausführungsform der Meßvorrichtung 1 dargestellt, wobei hier als Ausleger 20 ein ortsfest angebrachter Tragarm 41 in das Zentrum zur Antriebswelle 3 des Meßrades 4 gerichtet ist und in Schwenklagern 6 die Antriebswelle 3 lagert. Der Tragarm 41 ist von einem aufgrund des Reaktionsmomentes geringfügig verschwenkbaren Traggehäuse 40 umgeben, das mit einer Art Konsole 44 achsgleich mit der Antriebswelle 3 gelagert ist und gegenüber der den Tragarm 41 tragenden Basis 43 geringe Ausschlagbewegungen durch elastische Durchführungen 42 ermöglicht. Hierbei wirkt das Traggehäuse 40 wiederum auf eine Kraftmeßzelle 7, die hier an dem ortsfesten Tragarm 41 befestigt ist und somit Relativ-Schwenkbewegungen des Traggehäuses 40 aufgrund von Reaktionsmoment-Änderungen feststellt.

In Fig. 11 ist eine besondere Antriebsanordnung gezeigt, wobei der wiederum auf eine Kraftmeßzelle 7 über einen Hebelarm abgestützte Antriebsmotor 8 über eine topfförmige Magnetanordnung 50 und einen darin angeordneten Magnetläufer 51 die Antriebswelle 3 des Meßrotors 4 antreibt. Die Drehzahl des Meßrades 4 wird hier durch einen Impulsgeber 52 überwacht, so daß die Drehzahl des Meßrades 4 genau eingeregelt werden kann. Der Magnetantrieb zeichnet sich durch eine besondere Gleichförmigkeit aus, so daß negative Rückwirkungen auf die Drehmomenterfassung wie Schwingungen, die bei einem mechanisch gekoppelten Antrieb auftreten können, reduziert werden. Zudem eignet sich dieser Antrieb aufgrund der gekapselten Bauweise des Antriebsmotors 8 insbesondere für explosionsgefährdete Fördergüter, wie Mehl zur Vermeidung von Mehlstaubexplosionen. Als Antriebsmotoren 8 eignen sich insbesondere Reluktanzmotoren, da diese eine exakte Drehzahleinhaltung ermöglichen und somit eine Drehzahlüberwachung des Meßrades 4 entbehrlich ist. Es können jedoch auch Luft- oder Ölmotoren vorgesehen sein, beispielsweise kann in dem Förderweg vor dem Meßrad 4 ein Turbinenrad angeordnet sein, das insbesondere in pneumatischen Förderanlagen die Strömungsenergie in mechanische Energie zum Antrieb des Meßrades 4 umwandelt.
Es sei darauf hingewiesen, daß im Gegensatz zum Stand der Technik, wo grundsätzlich von einer konstanten Winkelgeschwindigkeit des Meßrades ausgegangen wird, die vorgeschlagene Corioliskraft-Meßvorrichtung auch mit variierender Drehzahl betrieben werden kann und die Drehzahl neben dem Drehmoment unter Produktbildung (M x n) zur Förderstärkenbestimmung insbesondere zur Einregelung auf einen gewünschten Massendurchsatz dient. Durch die vorgeschlagenen Maßnahmen zur Meßgenauigkeit-Erhöhung sind auch geringste Sollwert-Abweichungen zu erfassen. Zugleich verringern diese Maßnahmen, wie der kegelig ausgebildete Innenmantel des Meßrades und dessen Lagerung an einem seitlichen Auslegerarm den Wartungsbedarf erheblich.

Zur weiteren Erhöhung der Langzeit-Standfestigkeit der Meßvorrichtung kann desweiteren das Meßrad auch als Keramikbauteil ausgeführt sein, wobei die Herstellung von Keramikbauteilen bisher an bestimmte Durchmessergrenzen gebunden ist. Da das vorgeschlagene Meßrad mit im Eintrittsbereich gekrümmten Leitschaufeln eine Radialbeschleunigung bereits beim Eintritt der Fördergutpartikel ermöglicht, kann der Gesamtdurchmesser des Meßrades zur Erreichung eines bestimmten Corioliskraft-Mindestmeßwertes reduziert werden. Auch durch die Maßnahmen zur Erhöhung der Meßgenauigkeit kann das Verschleißverhalten verbessert werden, da bei höherer Meßgenauigkeit die Drehzahl des Meßrades reduziert werden kann und somit wiederum die Reibung und der Abrieb am Meßrad verringert wird.

## Patentansprüche

1. Vorrichtung zur Messung eines Massenstroms nach dem Coriolis-Prinzip, insbesondere eines pneumatisch geförderten Schüttgutes, mit einem von einem Antriebsmotor angetriebenen und in einem Gehäuse laufenden Meßrad, das einen Drehteller zur Umlenkung des Massenstroms von der axialen Zuführrichtung in eine am Umfang des Meßrades allseitige Abschleuderbewegung und radial ausgerichtete Leitschaufeln aufweist, und mit einer Drehmoment-Meßvorrichtung, die die beim Massendurchfluß durch das Meßrad auftretende Änderung des Antriebsdrehmomentes als Meßgröße zur Bestimmung des Massenstromes erfaßt,
dadurch gekennzeichnet, daß
das Meßrad (4) als Drehteller mit kegelförmigen Innenmantel (14) und kegelförmigen Außenmantel (13) ausgebildet ist, zwischen diesen (13, 14) die Leitschaufeln (5) angeordnet sind, und eine zwischen dem Innenmantel (14) und Außenmantel (13) gebildete Mittellinie (12) der Leitschaufeln (5) zur Achse (3) des Meßrades (4) in einem spitzen Winkel (x) ausgerichtet ist.

2. Vorrichtung nach Anspruch 1, dadurch gekennzeichnet, daß die Ausrichtung der Mittellinie (12) unter dem Winkel (x) der jeweiligen Resultierenden aus axialer Zuführgeschwindigkeit (a) und Radialgeschwindigkeit (r) im Meßrad (4) entspricht.

3. Vorrichtung nach Anspruch 1 oder 2, dadurch gekennzeichnet, daß der Winkel (x) 30 bis 60° beträgt.

4. Vorrichtung nach einem der Ansprüche 1 bis 3, dadurch gekennzeichnet, daß die Leitschaufeln (5) an den inneren, in den Zuführbereich (2) des Meßrades (4) ragenden Enden in Umlaufrichtung umgebogen sind.

5. Vorrichtung nach Anspruch 4, dadurch gekennzeichnet, daß die Leitschaufeln (5) - in Draufsicht auf den Zuführbereich (2) gesehen - etwa dreiecksförmige Abkantungsflächen (11) aufweisen.

6. Vorrichtung nach einem der Ansprüche 1 bis 5, dadurch gekennzeichnet, daß der Innenmantel (14) ein stationäres Lagergehäuse (17) des Meßrades (4) zumindest teilweise umschließt und das Lagergehäuse (17) den Antriebsmotor (8) und die Drehmoment-Meßvorrichtung (9) in sich aufnimmt und umschließt.

7. Vorrichtung nach einem der Ansprüche 1 bis 6, dadurch gekennzeichnet, daß
das Meßrad (4) an einem Ausleger (20) gelagert ist, der seitlich aus dem Gehäuse (16) herausgeführt ist und an seinem äußeren Ende auf eine Kraftmeßzelle (7) der Drehmoment-Meßvorrichtung (9) abgestützt ist.

8. Vorrichtung nach Anspruch 7, dadurch gekennzeichnet, daß der Ausleger (20) als parallelogrammartiges Lenkergestänge (26) zur Fesselung des Lagergehäuses (17) bzw. des Antriebsmotors (8) des Meßrades (4) ausgebildet ist.

9. Vorrichtung nach Anspruch 7, dadurch gekennzeichnet, daß der Ausleger (20) als Getriebegehäuse (30) ausgebildet ist, das ein Getriebe (32) in sich aufnimmt, wobei der Antriebsmotor (8) außerhalb des Gehäuses (16) angeordnet ist und das Getriebegehäuse (30) in eine daran angepaßte geschlossene Einbuchtung (25) des Gehäuses (16) hineinragt.

10. Vorrichtung nach einem der Ansprüche 1 bis 9, dadurch gekennzeichnet, daß der Antriebsmotor (8) einen topfförmigen Magnetanker (50) antreibt, in den ein Magnetläufer (51) eintaucht, der auf der Welle (3) des Meßrades (4) angeordnet ist.

## Claims

1. An apparatus for the determination of a mass flow rate following the Coriolis principle, in particular a pneumatically conveyed pourable material, comprising a measuring wheel driven by a driving motor and rotating in a housing, said measuring wheel comprising a rotary disk for deflecting the flow of material from the axial charging direction into a spin-off movement all around the periphery of said measuring wheel and radially oriented guide blades, and comprising a torque measuring device determining the change of the driving torque occurring during the flow of material through said measuring wheel, as a measuring value for determining the mass flow rate,
characterized in that
the measuring wheel (4) is formed as a rotary disk comprising a cone-type interior wall (14) and a cone-type exterior wall (13) having arranged therebetween (13, 14) the guide blades (5), and that a center line (12) of said guide blades (5), formed between said interior wall (14) and said exterior wall (13) extends at an acute angle (x) with respect to the axis (3) of said measuring wheel (4).

2. The apparatus of claim 1, characterized in that the orientation of said center line (12) at said angle (x) respectively corresponds to the resultant of axial charging speed (a) and radial speed (r) in said measuring wheel (4).

3. The apparatus of claim 1 or 2, characterized in that the angle (x) is between 30° and 60°.

4. The apparatus of any of claims 1 to 3, characterized in that the guiding blades (5) are bent off in rotational direction at their inner ends extending into the charging region (2) of said measuring wheel (4).

5. The apparatus of claim 4, characterized in that the guiding blades (5) - as seen in a plan view of the charging region (2) - have about triangle-type cut-off surfaces (11).

6. The apparatus of any of claims 1 to 5, characterized in that the interior wall (14) at least partially encloses a stationary bearing housing (17) of said measuring wheel (4), said bearing housing (17) accommodating and enclosing the driving motor (8) and the torque measuring device (9).

7. The apparatus of any of claims 1 to 6, characterized in that the measuring wheel (4) is mounted on a cantilever (20) laterally projected out of the housing (16) and supported at its exterior end on a load cell (7) of said torque measuring device (9).

8. The apparatus of claim 7, characterized in that the cantilever (20) is formed as a parallelogram-type lever linkage (26) for constraining the bearing housing (17) and the driving motor (8), respectively, of said measuring wheel (4).

9. The apparatus of claim 7, characterized in that the cantilever (20) is formed as a gearing housing (30) accommodating a gearing (32), with said driving motor (8) being arranged outside said housing (16) and said gearing housing (30) extending into a closed recess (25) of said housing (16) adapted thereto.

10. The apparatus of any of claims 1 to 9, characterized in that the driving motor (8) drives a pot-type magnetic armature (50) into which a magnetic rotor (51) is inserted arranged on the shaft (3) of said measuring wheel (4).

## Revendications

1. Dispositif de mesure d'un débit massique selon le principe de Coriolis, notamment d'un pulvérulent transporté pneumatiquement, avec une roue de mesure entraînée par un moteur d'entraînement et circulant dans un carter, roue qui présente un plateau tournant pour dévier le flux massique de la direction d'alimentation axiale en un mouvement de projection de tous côtés sur la périphérie de la roue de mesure, et qui présente des aubes directrices orientées radialement, et avec un dispositif de mesure de couple de rotation qui enregistre, comme grandeur de mesure pour la détermination du débit massique, la modification du couple de rotation d'entraînement qui apparaît lors du passage du flux massique à travers la roue de mesure,
**caractérisé** en ce que la roue de mesure (4) est réalisée sous forme de plateau tournant avec une enveloppe intérieure conique (14) et une enveloppe extérieure conique (13), enveloppes entre lesquelles sont disposées les aubes directrices (5), et une ligne médiane (12) des aubes directrices (5), formée entre l'enveloppe intérieure (14) et l'enveloppe extérieure (13), est orientée sous un angle aigu (x) par rapport à l'axe (3) de la roue de mesure (4).

2. Dispositif selon la revendication 1, **caractérisé** en ce que l'orientation de la ligne médiane (12) sous l'angle (x) correspond à la résultante respective de la vitesse d'alimentation axiale (a) et de la vitesse radiale (r) dans la roue de mesure (4).

3. Dispositif selon la revendication 1 ou 2, **caractérisé** en ce que l'angle (x) est égal à 30 à 60°.

4. Dispositif selon l'une des revendications 1 à 3, **caractérisé** en ce que les aubes directrices (5) sont recourbées dans la direction de circulation à leurs extrémités intérieures dépassant dans la région d'alimentation (2) de la roue de mesure (4).

5. Dispositif selon la revendication 4, **caractérisé** en ce que les aubes directrices (5) présentent, en vue de dessus sur la région d'alimentation (2), des faces biseautées (11) approximativement triangulaires.

6. Dispositif selon l'une des revendications 1 à 5, **caractérisé** en ce que l'enveloppe intérieure (14) entoure au moins partiellement un logement de palier stationnaire (17) de la roue de mesure (4), et le logement de palier (17) entoure et reçoit intérieurement le moteur d'entraînement (8) et le dispositif de mesure de couple de rotation (9).

7. Dispositif selon l'une des revendications 1 à 6, **caractérisé** en ce que la roue de mesure (4) est montée sur un avant-bras (20), qui sort latéralement du carter (16) et qui est appuyé, à son extrémité extérieure, sur une cellule dynamométrique (7) du dispositif de mesure de couple de rotation (9).

8. Dispositif selon la revendication 7, **caractérisé** en ce que l'avant-bras (20) est réalisé sous forme de parallélogramme articulé (26) pour le blocage du logement de palier (17) ou encore du moteur d'entraînement (8) de la roue de mesure (4).

9. Dispositif selon la revendication 7, **caractérisé** en ce que l'avant-bras (20) est réalisé sous forme de boîtier de transmission (30) qui reçoit intérieurement un mécanisme de transmission (32), le moteur d'entraînement (8) étant disposé en dehors du carter (16) et le boîtier de transmission (30) s'enfonçant dans une anfractuosité fermée (25), adaptée à ce boîtier, du carter (16).

10. Dispositif selon l'une des revendications 1 à 9, **caractérisé** en ce que le moteur d'entraînement (8) entraîne un induit (50) en forme de pot, dans lequel s'enfonce un rotor (51) qui est disposé sur l'arbre (3) de la roue de mesure (4).
